# EUROPÄISCHE PATENTSCHRIFT

(11) **EP 1 531 023 B1**
(45) Veröffentlichungstag und Bekanntmachung des Hinweises auf die Patenterteilung: **03.10.2007**
(21) Anmeldenummer: 04026294.1
(22) Anmeldetag: 05.11.2004
(51) Int. Cl.: B23B 51/02

(54) **Bohrplatte welche klemmend in einem Grundkörper befestigt ist.**
Drilling insert which is clamped in a body
Plaquette de forage qui est tenu serré dans un corps de base

(30) Priorität: 14.11.2003 DE 10353514
(43) Veröffentlichungstag der Anmeldung: 18.05.2005
(60) Teilanmeldung: 05015111.7
(73) Patentinhaber: Heule, Ulf, 9436 Balgach (CH)
(72) Erfinder: Heule, Heinrich, 9434 Au (CH); Studer, Harry, 9436 Balgach (CH)
(74) Vertreter: Riebling, Peter

(56) Entgegenhaltungen:
- US-A- 4 337 677
- US-A- 4 744 704
- US-A- 4 854 789
- US-B1- 6 514 019

## Beschreibung

Die Erfindung betrifft eine Bohrplatte mit einer klemmenden Befestigung in einem drehend angetriebenen Grundkörper nach dem Oberbegriff des Patentanspruchs 1.

Eine Bohrplatte mit klemmender Befestigung in einem Grundkörper ist beispielsweise mit dem Gegenstand der DE 197 36 598 C2 bekannt geworden. Dort bildet die obere Stirnseite des Grundkörpers eine nach oben geöffnete Nut, in welche die Bohrplatte einsetzbar ist. Im Grund der Nut ist ein Spannschlitz angeordnet, der von einer zugeordneten Spannschraube durchsetzt ist.

Die Bohrplatte weist diametral einander gegenüberliegende Anschlagflächen auf, die beim Gegenstand der DE 197 36 598 C2 einstellbar ausgebildet sind. Sie werden durch Gewindeschrauben gebildet,. die in zugeordneten Spannbacken im Grundkörper sitzen und dort einstellbar ausgebildet sind. Ihr bolzenseitiges Ende stützt sich an diametral aneinander gegenüberliegenden Anschlagflächen an der Bohrplatte ab.

Beim Einsetzen der Bohrplatte in den Grundkörper wird die Bohrplatte daher geringfügig um einen Drehwinkel entgegen der Bohrerarbeitsrichtung verdreht, so dass sich die Anschlagflächen in den Spannbacken (gebildet durch die bolzenseitigen Enden der Einstellschrauben) und die zugeordneten Anschlagflächen in der Bohrplatte aneinander lastübertragend anlegen.

Mit dem Festziehen einer den Spannschlitz durchgreifenden Spannschraube wird die Verbindung festgesetzt und formschlüssig gehalten.

Nachteil der bekannten Anordnung ist, dass mit zwei diametral einander gegenüberliegenden Einstellelementen ein hoher Einstellaufwand besteht, um die Bohrplatte im Grundkörper zu zentrieren. Jede Einstellschraube muss individuell mit einem zugeordneten Einstellwerkzeug eingestellt werden, um eine vorläufige Zentrierung der Bohrplatte im Grundkörper zu ermöglichen.

Neben diesem, durch die Einstellschrauben bedingten, hohen Einstellaufwand liegt der weitere Nachteil darin, dass die Klemmschraube noch zusätzlich zu betätigen ist, um schließlich die Bohrplatte im Grundkörper festzusetzen.

Es sind also insgesamt drei unterschiedliche Elemente einzustellen, was den hohen Einstellaufwand begründet.

Weiterhin ist nachteilig, dass die Einstellelemente bestehend aus den zwei diametral gegenüberliegenden Einstellschrauben ein einer anderen Ebene liegen als vergleichsweise die darunter liegende, den Klemmschlitz durchsetzende Klemmschraube.

Damit besteht der Nachteil, dass die Klemmkraft nur ungenügend auf die Bohrplatte übertragen werden kann, weil die Aufnahmeöffnung für die Bohrplatte im Querschnitt etwa trapezförmig ausgebildet ist. Dies führt dazu, dass die Bohrplatte nur im oberen Bereich der Aufnahmenut -aufgrund der Trapezform - gespannt wird, auch wenn die Spannschraube mit relativ hohem Drehmoment angezogen wird.

Weiter Nachteil ist, dass der Ort der Klemmschraube und der Ort des Klemmschlitzes relativ weit unterhalb der klemmenden Anlage (Aufnahmenut) von Bohrplatte und Grundkörper angeordnet werden muss, weil (in der Ebene darüber) die als Gewindeschrauben ausgebildeten Einstelletemente angeordnet werden müssen.

Damit ist eine relativ hohe Bauhöhe für die in getrennten Ebenen einzubauenden Elemente notwendig, was zu einer Verschlechterung der Klemmwirkung der Bohrplatte im Grundkörper führt.

Problematisch ist im Übrigen insgesamt die Verstellmöglichkeit der Einstellelemente, denn diese können unbeabsichtigt (oder auch willkürlich) verstellt werden, was zu einer Dejustierung der zentrierten Lage der Bohrplatte im Grundkörper führt. Eine erneute Justierung ist dann nur noch mit hohem Aufwand möglich.

Es handelt sich im Übrigen auch um ein statisch überbestimmtes System, weil durch entsprechend starkes Anziehen der Einstellschrauben für die vorläufige Festlegung der Bohrplatte die zugeordneten Spannbacken im Grundkörper bereits schon auseinandergespreizt werden, die dann durch Anziehen der Klemmschraube wieder zusammengeführt und zusammengepresst werden müssen.

Im Hinblick auf die Übertragung entsprechender hoher Arbeitsdrehmomente auf den Grundkörper besteht auch noch folgender Nachteil:

Die entsprechenden Zerspannungskräfte, welche auf die Bohrplatte wirken, werden auf die Spannbacken im Grundkörper übertragen. Die Spannbacken sind daher auf Abscherung beansprucht.

Nachdem die Spannbacken noch durch den sich von Nutengrund aus nach unten erstreckenden Spannschlitz geschwächt sind, besteht bei höheren Beanspruchungen die Gefahr, dass die Spannbacken unbeabsichtigt abscheren.

Nachteilig ist, dass die Bohrplatte aufnehmende, trapezförmige Zentriemute während der Übertragung von hohen Arbeitsdrehmomenten aufgeweitet wird, was zu einer hohen Materialbeanspruchung der Spannbacken im Grundkörper führt. Zusätzlich wird damit auch die Bohrplatte auf Abscherung beansprucht, weil sie ihre formschlüssige Anlage im Bereich der sich verformenden Nuten an deren Seitenwänden verliert und daher die Gefahr des Bruches der Bohrplatte besteht.

Mit der Druckschrift US 4,744,704 wird eine Bohrplatte mit einer klemmenden Befestigung in einem drehend angetriebenen Grundkörper offenbart, welcher an seiner Stirnseite eine nach oben offene Zentriemute ausbildet, wobei die Zentriernute durch zwei einander gegenüberliegende Befestigungsbacken begrenzt ist, in deren Bereich mindestens eine Zentrierflächen zur zentrierenden Anlage an die Bohrplatte angeordnet ist, welche die Bohrplatte in der Zentriernute zentriert, wobei an der Bohrplatte ein Zentrierflügel angeordnet ist, welcher sich an einer Zentrierfläche an den zugeordneten Befestigungsbacken des Grundkörpers anlegt, wobei eine Zentrierfläche in etwa spitzwinklig zur Drehachse der Bohrplatte ausgebildet ist, und wobei sich der eine Zentrierflügel an die eine Zentrierflächen im Bereich der Zentriernut anlegt
Diese Druckschrift weist den wesentlichen Nachteil auf, dass die Schneidplatten eingelötet sind und somit keine lösbare Befestigung im Sinne der vorliegenden Erfindung darstellen.

Mit der Druckschrift US 4,854,789 wird ein Halter für eine klemmende Aufnahme mit einer Klemmnut in einer Bohrplatte offenbart, wobei die Klemmwirkung mit Hilfe einer Schraube erfolgt, welche in ein zugeordnetes Gewinde eingreift und wobei die Zentrierung der Bohrplatte mittels einer u-förmige Nut am fußseitigen Ende ausgebildet ist, welche über einen Schraubenschaft hinübergeschoben wird, so dass der Schraubenschaft die Nut durchgreift und gegen Verdrehung zentrieren und sichern.
Diese Druckschrift hat den Nachteil, dass der Druckschrift eine Sicherung gegen axiales Herausziehen der Bohrplatte nicht zu entnehmen ist.
Des Weiteren müssen die vorhandenen, wulstförmigen Zentrierflächen genau rechtwinklig zu den unteren Auflageflächen stehen, was eine sehr präzise Fertigung erfordert und bei unpräziser Fertigung zum Verkippen der Bohrplatte und dadurch nicht maßgetreuen Bohrungen führt.

Mit der Druckschrift US 4,337,677 wird ebenfalls ein Halter zur Aufnahme einer Bohrplatte offenbart, wobei die Schneidkanten eine konische Form aufweisen und die Bohrplatte in eine zugehörige Aufnahmenut eingesetzt und eingelötet wird.
Diese Druckschrift weist ebenfalls den Nachteil auf, dass die eingelötete Bohrplatte keine lösbare Befestigung im Sinne der vorliegenden Erfindung aufweist.

Der Erfindung liegt deshalb die Aufgabe zugrunde eine Bohrplatte mit Grundkörper so weiterzubilden, dass die Bohrplatte im Grundkörper des Grundkörpers ohne Einsatz von zusätzlichen einstellbaren Anschlagelementen zentriert werden kann und das höhere Arbeitsdrehmomente auf die Bohrplatte übertragen werden können, ohne das es zu einer Beschädigung der Spannbacken des Grundkörpers oder der Bohrplatte kommt.

Zur Lösung der gestellten Aufgabe wird eine Bohrplatte gemäß dem Anspruch 1 vorgeschlagen.

Hierdurch ergibt sich der wesentliche Vorteil, dass die Bohrplatte in dem Grundkörper eine zentrierte und klemmende Befestigung ausbildet.

Erfindungsgemäß wird auch auf durch Gewindeschrauben gebildete Anschläge verzichtet. Durch die Anordnung fester Zentrierflügel erfolgt eine einfachere Herstellung der Bohrplatte und eine vereinfachte Justierung.

In einer Weiterbildung dieser Erfindungsidee ist vorgesehen, dass die Bohrplatte von mindestens einer Befestigungsschraube durchgriffen ist, welche die beiden Spannbacken im Grundkörper durchsetzt.

Mit der gegebenen technischen Lehre ergibt sich der wesentliche Vorteil, dass nun in der Bohrplatte selbst eine Bohrung für die Aufnahme einer Befestigungsschraube angeordnet ist und das nicht mehr - wie beim Stand der Technik - die Bohrplatte nur indirekt gespannt wird. Im Gegensatz hierzu war bei der erwähnten DE 197 36 598 C2 die Spannschraube unterhalb und außerhalb der Bohrplatte angeordnet.

Mit der Anordnung einer Spannschraube unmittelbar in der Bohrplatte ergibt sich ein erster, wesentlicher Vorteil, dass beim Anziehen der Spannschraube die Bohrplatte nach unten in Richtung auf den Nutengrund gezogen wird und sich dort formschlüssig und kraftübertragend anlegt.

Hierbei wird es bevorzugt, wenn die vorher genannten, diametral an der Bohrplatte einander gegenüberliegenden Zentrierflügel unterhalb der Bohrung für die Befestigungsschraube an der Bohrplatte angeordnet sind.

Hierauf ist die Erfindung jedoch nicht beschränkt. Es kann in einer anderen Ausgestaltung auch vorgesehen sein, dass die vorher genannten Zentrierflügel auf gleicher Höhe wie die Befestigungsschraube angeordnet sind.

Es ist zwar bekannt, Bohrplatten mit einer durchgehenden Bohrung für eine Spannschraube auszurüsten, um diese mit einer solchen Spannschraube im Grundkörper zu verankern. Beispielsweise wird auf die DE 198 34 635 A1 verwiesen. Nachteilig bei dieser Anordnung ist jedoch, dass die Bohrplatte fußseitig einen steckerförmigen Ansatz aufweist, der als Zapfen in eine zugeordnete Ausnehmung am Grund des Grundkörpers eingreift und dort formschlüssig aufgenommen ist. Ein solcher Zapfen wird hohen Drehmomenten unterworfen und neigt bei Einwirkung höherer Arbeitsdrehmomente zum Abscheren.

Hier setzt die Erfindung ein, die anstatt eines solchen fuß- oder grundseitigen Zapfens nun diametral einander gegenüberliegende und auf einem relativ großen Durchmesser liegende Zentrierflügel vorschlägt, die hohe Drehmomentbelastungen übertragen können. Es wird also auf einen in der Nähe der Drehachse liegenden Anschlag (Zapfen) verzichtet, der die entsprechende Arbeitsdrehmomente überträgt, weil bei der Erfindung die Zentrierflügel weit außerhalb auf einem großen Durchmesser liegen, und daher eine wesentlich bessere Übertragung hoher Arbeitsdrehmomente auf dem Grundkörper gewährleistet ist.

In einer bevorzugten Ausgestaltung der Erfindung ist es vorgesehen, dass die Zentrierflügel etwa im Bereich der bodenseitigen Stirnfläche der Bohrplatte angeordnet sind. Hierauf ist die Erfindung jedoch nicht beschränkt. Es kann - wie oben stehend dargelegt wurde - auch vorgesehen werden, dass die Zentrierflügel eine entsprechenden axialen Abstand von der fußseitigen Stirnfläche der Bohrplatte aufweisen und damit in die Nähe der Bohrung für den Durchgriff der Befestigungsschraube gerückt werden.

Je näher die Zentrierflügel nach oben in Richtung auf die die Drehmomente übertragenden Hauptschneiden kommen, desto geringer sind die Drehmomenten-Beanspruchungen die über das Material der Bohrplatte auf den Grundkörper übertragen werden. Damit wird die Standzeit der Bohrplatte wesentlich vergrößert, denn diese wird nicht mehr mit hohen Drehmomenten belastet, weil ein unmittelbarer Kraftfluss von den Hauptschneiden auf die in kurzem axialen Abstand ansetzenden Zentrierflügel erfolgt.

Die Hauptkraft bei der spannabhebenden Bearbeitung wird über die Befestigungsbacken übertragen und es handelt sich dabei um eine sehr großflächige und lastübertragende Verbindung, so dass auch in diesem Bereich keine unbeabsichtigte Aufweitung der die Bohrplatte aufnehmenden Zentriernute im Grundkörper zu befürchten ist.

Die Hauptlast der Drehmomenten-Übertragung wird von der Bohrplatte über kurze Verbindungswege auf die zugeordneten Befestigungsbacken im Grundkörper übertragen, dort von großdimensionierten Anschlagflächen aufgenommen und übertragen, wobei die Anschlagflächen ebenfalls bezüglich der Mittenquerlinie diametral einander gegenüberliegen.

Im Übrigen wird es bevorzugt, wenn die Lage der Zentrierflächen an der Bohrplatte orthogonal zur Achse der Befestigungsbohrung ist, weil dann sichergestellt ist, dass sich zunächst die Zentrierflügel an den zugeordneten Anschlagflächen des Grundkörpers anlegen und dann beim Festziehen der Befestigungsschraube eine Klemmwirkung erzielt wird.

Zur Erzielung dieser Klemmwirkung ist es - in an sich bekannter Weise - vorgesehen, dass sich vom Grund der Nute aus ein Klemmschlitz in den Grundkörpers des Grundkörpers hinein erstreckt.

Der im Grundkörper in axialer Richtung gebildete und parallel zu den Zentrierflächen orientierte Klemmschlitz dient dazu, dass sich zuerst die Zentrierflächen schließen und die Bohrplatte zentriert wird, bevor sie über die Klemmflächen geklemmt wird. Der Zentriervorgang und der Klemmvorgang nutzen die Elastizität des Befestigungssystems des Grundkörpers aus.

In der vorliegenden Anmeldung wird einerseits die Kombination zwischen einer Bohrplatte und einem Grundkörper als erfinderisch beansprucht, andererseits auch eine Bohrplatte in Alleinstellung.

Die Bohrplatte soll unabhängig von deren Aufnahme in einem Grundkörper geschützt werden, weil die Bohrplatte selbst erfinderische Merkmale aufweist.

Die Merkmale der Erfindung, die sich auf die Kombination der Bohrplatte und deren Befestigung im Grundkörper beziehen sind dadurch gekennzeichnet, dass eine optimale Aufnahme und Übertragung der Zerspanungskräfte bei einem positionsgenauen und stabilen Sitz der Bohrplatte erreicht wird.

Mittels der vorher erwähnten Befestigungsschraube wird die Bohrplatte zwischen den Befestigungsbacken des Grundkörpers gespannt beziehungsweise geklemmt.

Die Längsachse der Befestigungsschraube ist nun so ausgebildet, dass sie zu den Zentrierflächen im Bereich der Zentriernute des Grundkörpers in besonderer Weise ausgerichtet ist.

Hierbei wird zuerst die Zentrierfunktion über die Zentrierflächen und dann die Hauptspannfunktion über die Anschlagflächen im Bereich der Befestigungsnuten des Grundköpers wirkt.

Der Abstand der Mittelachse der Kopfsenkung der Befestigungsschraube ist zur Mittelachse der Befestigungsbohrung der Bohrplatte bezüglich der axialen Auflagefläche des Grundkörpers um einen Betrag nach unten versetzt, so dass der Schraubenkopfkegel in der Kopfsenkung der Befestigungsbohrung beim Anziehen der Befestigungsschraube nach unten gedrückt wird und somit die Bohrplatte gegen die axiale, fußseitige Auflagefläche im Grundkörper spannt.

Damit wird - wie vorhin ausgeführt - die Bohrplatte beim Festziehen der Befestigungsschraube in der Befestigungsbohrung des Grundkörpers mit ihrem fußseitigen Ende gegen den Grund der Nute gepresst und dort festgelegt.

Auf die Anordnung von fußseitig angeordneten Ansätzen - nach dem St. d. T. - kann somit verzichtet werden und stattdessen schlägt die Erfindung vor, hochlastübertragende und in ihrem Radius weit auseinanderliegende, diametral einander gegenüberliegende Zentrierflügel unmittelbar an den Seitenflächen der Bohrplatte anzuordnen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert in Seitenansicht ein Bohrwerkzeug;
- Figur 2:: die Draufsicht auf das Bohrwerkzeug;
- Figur 3:: perspektivisch die Unteransicht einer Bohrplatte;
- Figur 4:: der Grundkörper (Halter);
- Figur 5:: die Unteransicht der Bohrplatte;
- Figur 6:: perspektivische Seitenansicht der Bohrplatte;
- Figur 9:: Schnitt durch das Bohrwerkzeug in Höhe der Linie A-A in Figur 1;
- Figur 10:: Schnitt gemäß der Linie B-B in einer um 90° getreten Schnittachse im Vergleich zu den Schnitt nach Figur A-A.

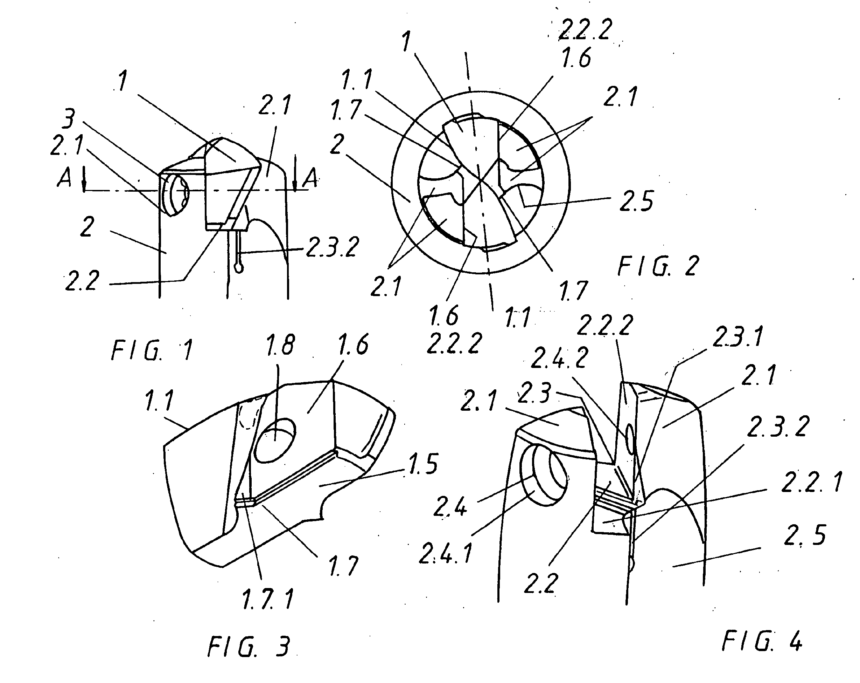

In Figur 1 ist allgemein ein Bohrwerkzeug dargestellt, bestehend aus einem Grundkörper 2, der eine nach oben geöffnete Befestigungsnute 2.2 ausbildet, deren Anschlagflächen 2.2.2 parallel zueinander ausgerichtet sind.

Die Anschlagflächen 2.2.2 sind spiegelsymmetrisch mittig zu einer Mittenlängsachse durch den Grundkörper 2 ausgebildet.

Durch die parallele Ausbildung der Anschlagflächen 2.2.2 wird eine im Profil etwa rechteckförmige Befestigungsnute gebildet, mit dem Vorteil, dass die hierdurch ausgebildeten Anschlagflächen 2.2.2 über ihren gesamten Querschnitt hochlastübertragend sind.

Selbstverständlich ist es in einer anderen Ausgestaltung auch möglich, diese Anschlagflächen 2.2.2 leicht konisch auszubilden, wobei allerdings dann die Lastübertragung verschlechtert wird.

Am Grund der Zentriernute 2.3 ist ein Klemmschlitz 2.3.2 angeordnet, der sich in das Material des Grundkörpers in axialer Richtung nach unten erstreckt.

Dieser Klemmschlitz kann bei Bedarf an seiner in den Grundkörper endenden Seite mit einer erweiternden Bohrung versehen werden.

Die Befestigungsnute 2.2 wird demgemäss durch zwei einander gegenüberliegende und spiegelbildlich zueinander ausgebildete Befestigungsbacken 2.1 im Grundkörper 2 definiert.

Die Figur 2 zeigt eine Draufsicht auf das Bohrwerkzeug mit einer Draufsicht auf die dort eingespannte Bohrplatte 1.

Es ist erkennbar, dass an der Bohrplatte 1 seitliche und diametral einander gegenüberliegende Zentrierflügel 1.7 angeformt sind, die sich an zugeordneten Zentrierflächen 2.3.1 im Bereich der Zentriernuten 2.3 der Befestigungsbacken 2.1 anlegen.

Man sieht ferner die diametral einander gegenüberliegenden Hauptschneiden 1.1 der Bohrplatte 1. Diametral gegenüberliegend von den Zentrierflügeln 1.7 werden die Hauptanlageflächen zwischen der Bohrplatte und den zugeordneten Flächen des Grundkörpers 2 ausgebildet.

Wichtig ist im Übrigen, dass die Spanfläche 1.2 der Bohrplatte 1 in die Zentrierflügel 1.7 übergeht, um den Grundkörper in diesem Bereich gegen Erosion durch ablaufende Späne zu schützen.

In Figur 3 ist die fußseitige Ansicht einer Bohrplatte 1 dargestellt, mit Ansicht der axialen, fußseitigen Auflagefläche 1.5. Es ist dargestellt, dass die erfindungsgemäßen Zentrierflügel 1.7 einander diametral gegenüberliegen und Zentrierflächen 1.7.1 ausgebildet sind.

Diese Zentrierflächen 1.7.1 sind etwa abgerundete, dreiecksförmige Flächen, die sich von der Fußseite (von der axialen Auflagefläche 1.5) schräg konisch nach oben zulaufend erstrecken.

Die wesentlichen, Drehmomente übertragenden Flächen sind jedoch die Anschlagflächen 1.6, die sich großflächig von der axialen Auflagefläche 1.5 nach oben erstrecken und die jeweils von der Befestigungsbohrung 1.8 durchsetzt sind.

Die Figur 4 zeigt die perspektivische Ansicht des Grundkörpers 2 mit Ausbildung der Zentriernute 2.3 und den vorher erwähnten etwa parallel zueinander angeordneten und bezüglich einer axialen Mittenlängsrichtung symmetrischen Anschlagflächen 2.2.2. Diese Anschlagflächen 2.2.2 wirken mit den zugeordneten Anschlagflächen 1.6 der Bohrplatte 1 zusammen.

Ferner ist erkennbar, dass die Befestigungsbohrung 2.4 in der einen (linken) Befestigungsbacke 2.1 eine Kopfsenkung 2.4.1 aufweist, während in der gegenüberliegenden (rechten) Befestigungsbacke 2.1 ein Gewinde 2.4.2 ausgebildet ist.

Die vorher erwähnten Zentrierflügel 1.7 legen sich hierbei an den etwa spitzwinklig ausgebildeten Zentrierflächen 2.3.1 im Bereich der Zentriernute 2.3 an.

Die Figur 4 zeigt im Übrigen, dass sich der Klemmschlitz 2.3.2 vom Grund der Zentriernute 2.3 axial nach unten in das Materials des Grundkörpers 2 erstreckt.

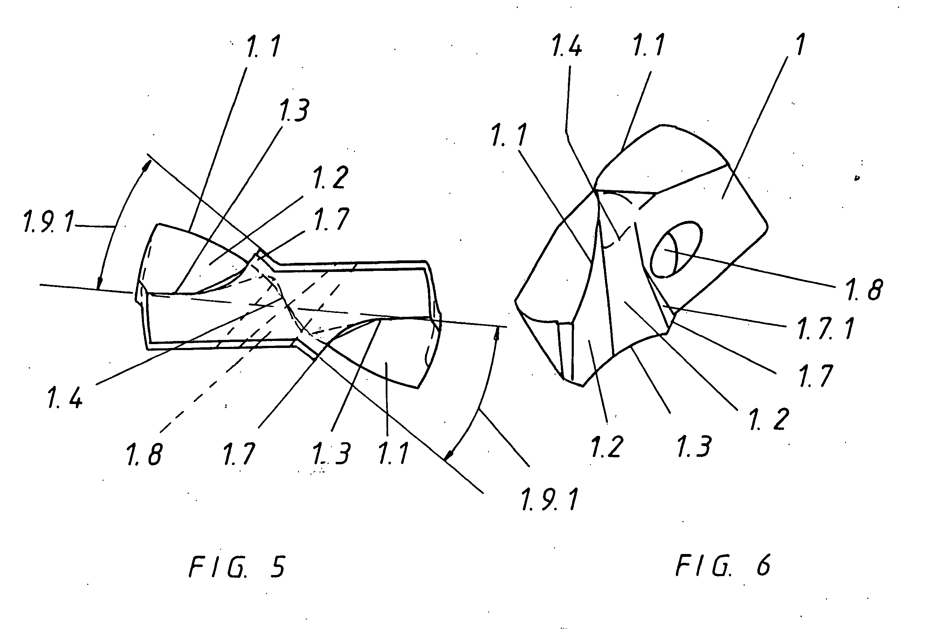

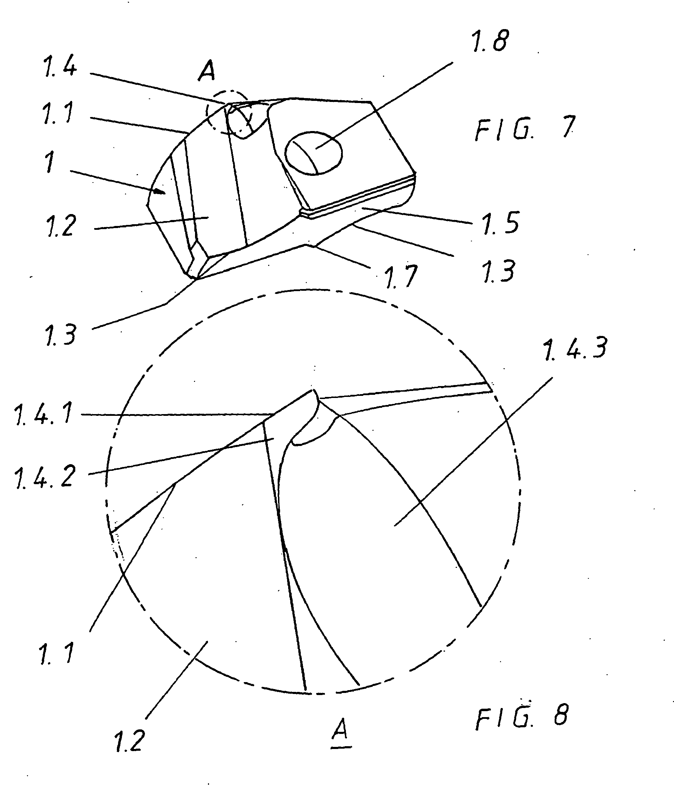

Die Figuren 5 und 6 zeigen weitere Einzelheiten der Bohrplatte 1. Es ist erkennbar, dass diametral gegenüberliegende Hauptschneiden 1.1 angeordnet sind, die S-förmig ineinander übergehen und hierbei die Ausspitzung 1.4 überqueren oder durchsetzen.

Die Hauptschneiden 1.1 bilden also zwei konvexe Schneidflächen, die in der Draufsicht eine S-Form bilden.

Dem gegenüberliegend sind die Austrittskanten 1.3 für die Spanflächen 1.2 vorgesehen, die insgesamt gemäß Figur 5 konkav ausgebildet sind.

Zwar zeigt die Figur 6, dass sich die Spanfläche 1.2 auf beiden Seiten einer etwa vertikal verlaufenden Kante erstreckt. Diese Kante ist jedoch nur aus zeichnerischen Gründen vorhanden. In Wirklichkeit ist die Spanfläche 1.2 eine durchgehend stetige, gekrümmte Fläche zur Ableitung der Späne, die sich von der Ausspitzung 1.4 nach unten in gleichmäßig und stetig gekrümmten Formen erstreckt.

Die Zentrierflügel 1.7 bilden gemäß Figur 6 schräge Zentrierflächen 1.7.1 die mit den vorher erwähnten, ebenfalls schräg ausgebildeten und etwa spitzwinkelig geformten Zentrierflächen 2.3.1 im Grundkörper 2 zusammenwirken.

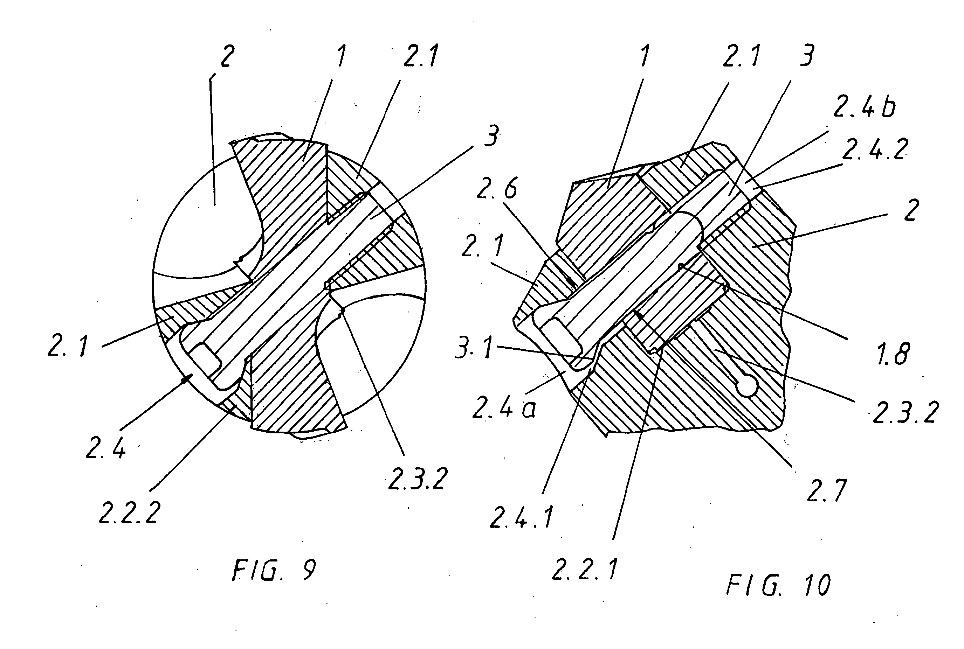

Die Figuren 9 und 10 zeigen weitere Einzelheiten der Klemmbefestigung.

Die Befestigungsschraube 3 weist einen Schraubenkopfkegel 3.1 auf, der sich an einer zugeordneten Kopfsenkung 2.4.1 im Bereich der Befestigungsbohrung 2.4 anlegt.

Somit liegt die kegelförmige Kopfsenkung 2.4.1 in der linken Befestigungsbacke 2.1 in der linken Befestigungsbohrung 2.4 in der Befestigungsbacke 2.1 an einer anderen Stelle an, als vergleichsweise gegenüberliegend der Gewindebolzen 2.4.2 der Befestigungsschraube 3 in der rechten Befestigungsbohrung 2.4.

Die beiden Bohrungen 2.4 sind also in den einander gegenüberliegenden Befestigungsbacken 2.1 geringfügig zueinander in radialer Richtung versetzt.

Das heißt, die Längsmittenachse durch die linke Befestigungsbohrung 2.4 fluchtet nicht mit der Längsmittenachse durch die rechte Befestigungsbohrung 2.4. Diese beiden Achsen sind in radialer Richtung zueinander versetzt.
Dies führt dazu, dass sich der Schraubenkopfkegel 3.1 an der Kopfsenkung 2.4.1 anlegt und beim Anziehen der Befestigungsschraube wird diese gekippt und ragt schräg in die gegenüberliegende Befestigungsbohrung 2.4.b hinein. Somit kommt es bei Position 2.6 im Vergleich zu der in axialer Richtung der dahinterliegenden Position 2.7 zu einer Kippbewegung und somit wird die gesamte Bohrplatte 1 in Richtung auf den Nutengrund gezogen und formschlüssig im Nutengrund festgehalten.

Gleichzeitig schließt sich geringfügig der Klemmschlitz 2.3.2 und bringt die diametral einander gegenüberliegenden Anschlagflächen 2.2.2 zur formschlüssigen Anlage an den zugeordneten Anschlagflächen 1.6 der Bohrplatte 1.

Vorteil des erfindungsgemäßen Bohrwerkzeuges ist, dass man lediglich mit einer einzigen Befestigungsschraube die Bohrplatte in einer zugeordneten Zentriernute 2.3 im Grundkörper 2 festlegt und hierbei keinerlei weitere Einstellmittel (wie weitere Gewindeschrauben und dergleichen) benötigt.

Es wird damit eine hochlastübertragende Verbindung über großflächige Anschlagflächen 1.6 geschaffen. Die vorher erwähnten, erfindungsgemäßen Zentrierflügel 1.7 dienen damit lediglich zur vorläufigen Zentrierung der Bohrplatte 1 im Grundkörper 2, solange die Befestigungsschraube noch nicht festgezogen ist.

Nach dem Festziehen der Befestigungsschraube 3 wirken somit zwei unterschiedliche Anschlagflächen, nämlich einmal die hochlastübertragenden Anschlagflächen 1.6 und die kleineren, lastübertragenden Zentrierflügel 1.7 mit ihren zugeordneten Zentrierflächen 1.7.1.

Eine Bohrplatte 1 nach der Erfindung ist hochlastübertragend und hat eine hohe Standzeit, weil Verformungskräfte in optimaler Weise von den Hauptschneiden 1.1 ein den Grundkörper 2 eingeleitet werden.

Wichtig ist, dass die Verformungskräfte überwiegend von der Befestigungsschraube 3 aufgenommen werden, welche diese in die Befestigungsbacken 2.1 des Grundkörpers 2 einleitet.

Damit wird eine hochlastübertragende Verbindung geschaffen, die gegen Abscheren und Verschleiß geschützt ist. In der Anordnung der erfindungsgemäßen Zentrierflügel 1.7 kommt es dem gemäß zu einer selbsttätigen Zentrierung der Bohrplatte 1 im Grundkörper 2.

### Zeichnungslegende

1. Bohrplatte
   1.1. Hauptschneide
   1.2. Spanfläche
   1.3. Austrittskante
   1.4. Ausspitzung
      1.4.1. Schneide
      1.4.2. Verlängerte Spanfläche
      1.4.3. Verrundete Nebenflächen
   1.5. Axiale Auflagefläche
   1.6. Anschlagfläche
   1.7. Zentrierflügel
      1.7.1. Zentrierfläche
   1.8. Befestigungsbohrung
      1.9.1 Zentrierwinkel
2. Grundkörper
   2.1. Befestigungsbacken
   2.2. Befestigungsnute
      2.2.1. Axiale Auflagefläche
      2.2.2. Anschlagfläche
   2.3.Zentriernute
      2.3.1. Zentrierfläche
      2.3.2. Klemmschlitz
   2.4. Befestigungsbohrung a, b
      2.4.1. Kopfsenkung
      2.4.2. Gewinde
   2.5. Spannute
   2.6. Position
   2.7. Position
3. Befestigungsschraube
   3.1. Schraubenkopfkegel
Y = Mittenquerachse

## Patentansprüche

1. Bohrplatte mit einer klemmenden Befestigung in einem drehend angetriebenen Grundkörper (2), der an seiner einen Stirnseite eine nach oben offene Zentriernute (2.3) ausbildet, wobei die Zentriernute (2.3) durch mindestens zwei einander gegenüberliegende Befestigungsbacken (2.1) begrenzt ist, in deren Bereich mindestens eine Zentrierfläche (2.3.1) zur zentrierenden Anlage an die Bohrplatte (1) angeordnet ist und die Klemmbefestigung durch eine Befestigungsschraube (3) gebildet ist, welche die Bohrplatte in der Zentriemute (2.3) zentriert, wobei an der Bohrplatte (1) mindestens ein Zentrierflügel (1.7) angeordnet ist, der sich an mindestens einer Zentrierfläche (2.3.1) an den zugeordneten Befestigungsbacken (2.1) des Grundkörpers (2) anlegt, und wobei die Zentriernute (2.3) zwei parallel zueinander ausgerichtete Anschlagflächen (2.2.2) ausbildet, **dadurch gekennzeichnet, dass** die mindestens eine Zentrierfläche (2.3.1) spitzwinklig zu einer der beiden Anschlagflächen (2.2.2) ausgebildet ist, wobei sich der mindestens eine Zentrierflügel (1.7) an die mindestens eine Zentrierfläche (2.3.1) im Bereich der Zentriernut (2.3) anlegt.

2. Bohrplatte nach Anspruch 1, **dadurch gekennzeichnet, dass** zwei einander gegenüberliegende Zentrierflügel (1.7) angeordnet sind, die sich an zugeordneten Zentrierflächen (2.3.1) an den zugeordneten Befestigungsbacken (2.1) des Grundkörpers (2) anlegen.

3. Bohrplatte nach Anspruch 1 oder 2, **dadurch gekennzeichnet, dass** die Bohrplatte (1) von mindestens einer Befestigungsschraube (3) durchgriffen ist, welche die beiden Befestigungsbacken (2.1) im Grundkörper (2) durchsetzt.

4. Bohrplatte nach einem der Ansprüche 1 bis 3, **dadurch gekennzeichnet, dass** die an der Bohrplatte (1) einander gegenüberliegenden Zentrierflügel (1.7) unterhalb der Bohrung (2.4) für die Befestigungsschraube an der Bohrplatte angeordnet sind.

5. Bohrplatte nach einem der Ansprüche 1 bis 4, **dadurch gekennzeichnet, dass** die an der Bohrplatte (1) einander gegenüberliegenden Zentrierflügel (1.7) auf etwa gleicher Höhe wie die Bohrung (2.4) für die Befestigungsschraube an der Bohrplatte angeordnet sind.

6. Bohrplatte nach einem der Ansprüche 1 bis 5, **dadurch gekennzeichnet, dass** die Lage der Zentrierflächen (1.7.1) an der Bohrplatte (1) bevorzugt in etwa orthogonal zur Achse der Befestigungsbohrung (2.4) ist.

7. Bohrplatte nach einem der Ansprüche 1 bis 6, **dadurch gekennzeichnet, dass** die Bohrplatte (1) beim Festziehen der Befestigungsschraube (3) in der Befestigungsbohrung (2.4) des Grundkörpers (2) mit ihrem fußseitigen Ende gegen den Grund der Befestigungsnute (2.2) gepresst und dort festgelegt ist.

8. Bohrplatte nach Anspruch 7, **dadurch gekennzeichnet, dass** die Bohrungsachsen der Befestigungsbohrungen (2.4a und 2.4b) radial zueinander versetzt in den Befestigungsbacken (2.1) des Grundkörpers (2) angeordnet sind.

9. Bohrplatte nach einem der Ansprüche 1 bis 8, **dadurch gekennzeichnet, dass** die in der Befestigungsnute (2.2) angeordneten Anschlagflächen (2.2.2) etwa parallel zueinander ausgerichtet sind.

10. Bohrplatte nach einem der Ansprüche 1 bis 9, **dadurch gekennzeichnet, dass** den Zentrierflügeln (1.7) diametral gegenüberliegend die Hauptanlageflächen (2.2.2) zwischen der Bohrplatte und den zugeordneten Flächen des Grundkörpers 2 ausgebildet sind.

11. Bohrplatte nach einem der Ansprüche 1 bis 9, **dadurch gekennzeichnet, dass** die Zentrierflächen (1.7.1) an den Zentrierflügeln (1.7) Flächen sind, die sich konisch nach oben zulaufend in der Bohrplatte (1) erstrecken und an gleich geformten Zentrierflächen (2.3.1) am Grundkörper (2) anliegen.

## Claims

1. Drill tip with a clamping attachment to a rotationally driven drill body (2) formed with a centring slot (2.3), open upwards, on its one end face, the centring slot (2.3) being bounded by at least two opposing attachment jaws (2.1) in the region of which at least one centring face (2.3.1) for a centring abutment against the drill tip (1) is arranged and the clamping attachment being made by a fixing screw (3) which centres the drill tip in the centring slot (2.3), at least one centring lobe (1.7), which abuts against at least one centring face (2.3.1) on the corresponding attachment jaws (2.1) of the drill body (2), being arranged on the drill tip (1), and the centring slot (2.3) forming two stop faces (2.2.2) aligned parallel with each other, **characterized in that** the at least one centring face (2.3.1) is formed at an acute angle to one of the two stop faces (2.2.2), the at least one centring lobe (1.7) abutting against the at least one centring face (2.3.1) in the region of the centring slot (2.3).

2. Drill tip according to claim 1, **characterized in that** two centring lobes (1.7) arranged opposite each other abut against corresponding centring faces (2.3.1) on the corresponding attachment jaws (2.1) of the drill body (2).

3. Drill tip according to claim 1 or claim 2, **characterized in that** the drill tip (1) is transfixed by at least one fixing screw (3) passing through the two attachment jaws (2.1) in the drill body (2).

4. Drill tip according to any one of claims 1 to 3, **characterized in that** the opposing centring lobes (1.7) on the drill tip (1) are arranged on the drill tip below the hole (2.4) for the fixing screw.

5. Drill tip according to any one of claims 1 to 4, **characterized in that** the opposing centring lobes (1.7) on the drill tip (1) are arranged on the drill tip at about the same height as the hole (2.4) for the fixing screw.

6. Drill tip according to any one of claims 1 to 5, **characterized in that** the orientation of the centring faces (1.7.1) on the drill tip (1) is preferably approximately at right angles to the axis of the fixing hole (2.4).

7. Drill tip according to any one of claims 1 to 6, **characterized in that** when the fixing screw (3) is screwed home in the fixing hole (2.4) of the drill body (2), the drill tip (1) is pressed by its bottom end against the root of the attachment slot (2.2) and there secured.

8. Drill tip according to claim 7, **characterized in that** the bore axes of the fixing holes (2.4a and 2.4b) in the attachment jaws (2.1) of the drill body (2) are radially offset from each other.

9. Drill tip according to any one of claims 1 to 8, **characterized in that** the stop faces (2.2.2) arranged in the attachment slot (2.2) are aligned approximately parallel with each other.

10. Drill tip according to any one of claims 1 to 9, **characterized in that** the main abutment faces (2.2.2) between the drill tip and the corresponding faces of the drill body 2 are formed diametrically opposite the centring lobes (1.7).

11. Drill tip according to any one of claims 1 to 9, **characterized in that** the centring faces (1.7.1) on the centring lobes (1.7) are surfaces which extend with an upwards-converging taper in the drill tip (1) and abut against similarly formed , centring faces (2.3.1) on the drill body (2).

## Revendications

1. Plaquette de perçage comportant une fixation par serrage dans un corps de base (2), entraîné en rotation, qui forme sur un côté frontal une rainure de centrage (2.3) ouverte vers le haut, étant précisé que la rainure de centrage (2.3) est délimitée par au moins deux mâchoires de fixation (2.1) qui se font face et dans la zone desquelles est disposée au moins une surface de centrage (2.3.1) pour l'application centrée contre la plaquette de perçage (1), que la fixation par serrage est formée par une vis de fixation (3) qui centre la plaquette dans la rainure de centrage (2.3), qu'il est prévu sur la plaquette de perçage (1) au moins une aile de centrage (1.7) qui s'applique contre au moins une surface de centrage (2.3.1) des mâchoires de fixation associées (2.1) du corps de base (2), et que la rainure de centrage (2.3) forme deux surfaces de butée (2.2.2) qui sont parallèles, **caractérisée en ce que** la ou les surfaces de centrage (2.3.1) forment un angle aigu par rapport à l'une des deux surfaces de butée (2.2.2), la ou les ailes de centrage (1.7) s'appliquant contre la ou les surfaces de centrage (2.3.1) dans la zone de la rainure de centrage (2.3).

2. Plaquette de perçage selon la revendication 1, **caractérisée en ce qu'**il est prévu deux ailes de centrage (1.7) qui se font face et qui s'appliquent contre des surfaces de centrage associées (2.3.1) prévues sur les mâchoires de fixation associées (2.1) du corps de base (2).

3. Plaquette de perçage selon la revendication 1 ou 2, **caractérisée en ce que** la plaquette de perçage (1) est traversée par au moins une vis de fixation (3) qui traverse les deux mâchoires de fixation (2.1) prévues dans le corps de base (2).

4. Plaquette de perçage selon l'une des revendications 1 à 3, **caractérisée en ce que** les ailes de centrage opposées (1.7) qui sont prévues sur la plaquette de perçage (1) sont disposées au-dessous du perçage (2.4) prévu pour la vis de fixation sur ladite plaquette.

5. Plaquette de perçage selon l'une des revendications 1 à 4, **caractérisée en ce que** les ailes de centrage opposées (1.7) qui sont prévues sur la plaquette de perçage (1) sont disposées à peu près à la même hauteur que le perçage (2.4) prévu pour la vis de fixation sur ladite plaquette.

6. Plaquette de perçage selon l'une des revendications 1 à 5, **caractérisée en ce que** la position des surfaces de centrage (1.7.1) sur la plaquette de perçage (1) est de préférence à peu près orthogonale par rapport à l'axe du perçage de fixation (2.4).

7. Plaquette de perçage selon l'une des revendications 1 à 6, **caractérisée en ce que** lors du serrage de la vis de fixation (3) dans le perçage de fixation (2.4) du corps de base (2), ladite plaquette (1) est pressée avec son extrémité située du côté de sa base contre le fond de la rainure de fixation (2.2) et est bloquée à cet endroit.

8. Plaquette de perçage selon la revendication 7, **caractérisée en ce que** les axes des perçages de fixation (2.4a et 2.4b) sont décalés radialement dans les mâchoires de fixation (2.1) du corps de base (2).

9. Plaquette de perçage selon l'une des revendications 1 à 8, **caractérisée en ce que** les surfaces de butée (2.2.2) disposées dans la rainure de fixation (2.2) sont à peu près parallèles.

10. Plaquette de perçage selon l'une des revendications 1 à 9, **caractérisée en ce que** les surfaces d'application principales (2.2.2) sont diamétralement opposées par rapport aux ailes de centrage (1.7), entre ladite plaquette et les surfaces associées du corps de base (2).

11. Plaquette de perçage selon l'une des revendications 1 à 9, **caractérisée en ce que** les surfaces de centrage (1.7.1) prévues sur les ailes de centrage (1.7) sont des surfaces qui s'étendent suivant une forme conique effilée vers le haut, dans la plaquette de perçage (1), et qui s'appliquent contre des surfaces de centrage (2.3.1) de formes identiques prévues sur le corps de base (2).
